# EUROPÄISCHE PATENTSCHRIFT

(11) **EP 1 320 470 B1**
(45) Veröffentlichungstag und Bekanntmachung des Hinweises auf die Patenterteilung: **09.06.2004**
(21) Anmeldenummer: 01973792.3
(22) Anmeldetag: 27.09.2001
(51) Int. Cl.: B60K 23/08, B60K 23/04

(54) **ANTRIEBSSYSTEM FÜR EIN ALLRADGETRIEBENES KRAFTFAHRZEUG**
DRIVE SYSTEM FOR AN ALL-WHEEL DRIVEN MOTOR VEHICLE
SYSTEME D'ENTRAINEMENT POUR VEHICULE A MOTRICITE INTEGRALE

(30) Priorität: 27.09.2000 AT 7112000
(43) Veröffentlichungstag der Anmeldung: 25.06.2003
(73) Patentinhaber: Magna Steyr Powertrain AG & Co KG, 8502 Lannach (AT)
(72) Erfinder: GRATZER, Franz, A-8152 Stallhofen (AT)
(74) Vertreter: Kovac, Werner
(86) Internationale Anmeldenummer: PCT/AT2001/000307
(87) Internationale Veröffentlichungsnummer: WO 2002/026517

(56) Entgegenhaltungen:
- EP-A- 0 629 790
- WO-A-96/41090
- WO-A-99/29530
- AT-U- 3 832

## Beschreibung

Die Erfindung handelt von einem Antriebssystem für ein allradgetriebenes Kraftfahrzeug mit den Merkmalen des Oberbegriffs von Anspruch 1.

Derartige Antriebssysteme kommen bei allradgetrieben Kraftfahrzeugen zur Anwendung, bei denen eine Achse permanent und schlupffrei und die andere über eine differenzdrehzahlabhängige Kupplung angetrieben ist. Damit erübrigt sich ein (insbesondere sperrbares) Zwischenachsdifferential, weil die Verbindung zwischen den Achsen nicht starr ist. Bei Durchdrehen der Räder der permanent angetriebenen Achse wird über die differenzdrehzahlabhängige Kupplung ein größeres Drehmoment auf die zweite angetriebene Achse übertragen, die Verbindung zwischen den beiden Achsen ist dann im Extremfall starr. Die zweite Achse braucht ihrerseits eine Vorrichtung zur zumindest teilweisen Synchronisierung ihrer Räder, sei es durch selektives Bremsen, sei es ein sperrbares Achsdifferential. Dadurch soll das Durchdrehen eines Rades verhindert werden.

Bekannte gattungsgemäße Antriebssysteme dieser Art besitzen als differenzdrehzahlabhängige Kupplung Flüssigkeitsreibungskupplungen (Viscokupplungen), die steuerbar sein können, oder Kupplungen mit Verdrängungspumpen, wie etwa in der EP 629 790 B oder in dem AT U 3832 beschrieben. Bei Kupplungen mit Pumpe kann das von der Pumpe beziehungsweise den Pumpen unter Druck gesetzte Fluid entweder direkt ein Drehmoment übertragen oder eine reibschlüssige Kupplung beaufschlagen, die dann ein vom anstehenden Druck abhängiges Drehmoment auf die zweite angetriebene Achse übertragt.

Als Vorrichtungen zum totalen oder teilweisen Sperren des Differentiales zwischen den Rädern der zweiten Achse sind formschlüssige und reibschlüssige Systeme bekannt, die zur Betätigung eine eigene Energiequelle benötigen, sei sie mechanisch, hydraulisch, elektromechanisch oder auch nur eine eigene Pumpe. Bei formschlüssigen Systemen ist oft auch noch ein vom Fahrer gegebener Befehl zum Einrücken nötig, im richtigen Moment.

Allen diesen Lösungen ist daher zunächst ein hoher konstruktiver Aufwand und erheblicher Raumbedarf eigen. Ihre Steuerung der Differentialsperre ist schwierig, da diese auch den Betriebszustand der differenzdrehzahlabhängigen Kupplung berücksichtigen muss. So ist beispielsweise sicherzustellen, dass das Achsdifferential nicht gesperrt wird, solange die differenzdrehzahlabhängige Kupplung noch nicht greift.

Alternativ ist es aus der WO-A 96/41090 (Variante der Fig. 14) bekannt, die beiden Räder der zweiten Achse einzeln, jedes über eine eigene differenzdrehzahlabhängige Kupplung anzutreiben. Dabei wird für jede Seite eine eigene Gerotor-Pumpe verwendet, man spricht von einer "Twin - Anordnung". Wegen des bei Achsdrehzahl viel höheren Drehmomentes (als bei der höheren Kardanwellendrehzahl) erfordert diese jedoch ein sehr breites Gehäuse zwischen den Rädern der zweiten Achse, was eine schlechte Raumausnutzung und ungünstig kurze Radwellen bedeutet. Vor allem aber ist Abstimmung und symmetrische Momentenverteilung auf die beiden Räder und das Zusammenwirken mit elektronisch gesteuerten Bremssystemen (z.B. ABS) nicht gewährleistet. Die Momentenverteilung krankt auch daran, dass bei Kurvenfahrt das kurvenäussere Rad im Schubbetrieb läuft, also nicht zur Traktion beiträgt.

Es ist daher Ziel der Erfindung, ein Antriebssystem vorzuschlagen, das bei geringstem technischen Aufwand ein zeitlich sauber abgestimmtes und den Fahrzustand berücksichtigendes Ansprechen der Differentialsperre gewährleistet.

Erfindungsgemäß wird das erreicht durch die Merkmale des Anspruchs 1.

Die differenzdrehzahlabhängige Kupplung überträgt somit das gesamte für die zweite Achse bestimmte Drehmoment bei relativ hoher Drehzahl, braucht somit nur wenig Bauraum. Die Betätigung der Sperre durch das Druckfluid aus der Pumpe der differenzdrehzahlabhängigen Kupplung erspart eine eigene Energiequelle, erlaubt eine gute zeitliche Abstimmung der beiden Sperren und ist den Anforderungen eines elektronisch gesteuerten Bremssystemes anpassbar. Sie stellt auch sicher, dass die Achssperre nicht wirkt, bevor die differenzdrehzahlabhängige Kupplung greift. Bei geeigneter Dimensionierung der Verbindungsleitung und Einstellung des Betätigungsorganes ist so eine Sperre des Differentiales im richtigen Moment beziehungsweise im richtigen Ausmaß ohne besondere Steuerung zu erreichen.

Vorteilhafte Ausführungsformen sind in den abhängigen Ansprüchen enthalten.

In einer bevorzugten Ausführungsform, in der die gesamte differenzdrehzahlabhängige Kupplung mit der Pumpe selbst rotiert und in einem stationären Gehäuse untergebracht ist, ist die Wirkverbindung mit dem Betätigungsorgan des sperrbaren Differentiales über eine Drehdurchführung zwischen rotierendem und stationärem Gehäuse und über eine Verbindungsleitung zum Betätigungsorgan hergestellt ist (Anspruch 2). Auf diese Weise wird der Fluiddruck in das Gehäuse übertragen und kann in einer gehäusefesten Leitung beziehungsweise sogar im Gehäuse selbst zum Differential führen. Bei Verwendung einer steuerbaren differenzdrehzahlabhängigen Kupplung ist eine Drehdurchführung in der Regel sowieso vorhanden, sodass kein zusätzlicher Aufwand entsteht.

In einer möglichen Ausführungsform ist die Pumpe beziehungsweise, etwa bei Vorhandensein einer Vorpumpe, ist mindestens eine Pumpe im stationären Gehäuse angordnet, von dem die Verbindungsleitung zum Betätigungsorgan führt (Anspruch 3). So kann man sich die Drehdurchführung ersparen.

In einer Ausführungsform der Erfindung besitzt das Differential eine formschlüssige Sperre, ist das Betätigungsorgan gehäusefest und wirkt über eine mechanische Kraftübertragung auf die Sperre (Anspruch 4). In einer anderen Ausführungsform der Erfindung besitzt das Differential eine formschlüssige Sperre, deren Betätigungsorgan ist ein mitdrehender Fluidkolben und die Wirkverbindung mit der Pumpe ist über eine weitere Drehdurchführung hergestellt (Anspruch 5). Erstere Lösung ist besonders einfach, wenn eine Totalsperre des Achsdifferentiales den Anforderungen genügt, die zweitere ist für eine feinfühlige Einstellung des Sperrmomentes die bessere Lösung.

In Weiterbildung der Erfindung ist in der Verbindungsleitung ein Steuerventil für die Steuerung des sperrbaren Differentiales vorgesehen (Anspruch 6). Dieses erlaubt eine Abstimmung des zeitlichen Ablaufes der Sperrung der differenzdrehzahlabhängigen Kupplung und der Achssperre und der Sperrmomente; im Falle einer formschlüssigen Sperrkupplung nur ersteres. Im einfachsten Fall ist das Steuerventil ein Drosselventil, es könnte aber auch ein Temperaturkompensations- ein Druckbegrenzungs- oder ein Verzögerungsvenil sein. Für hohe Ansprüche ist es ein in Abhängigkeit von fahrzustandsspezifischen Größen angesteuertes Ventil.

Für höchste fahrdynamische Ansprüche ist die differenzdrehzahlabhängige Kupplung steuerbar. Zu diesem Zweck ist die Druckseite der Pumpe über einen Druckkanal mit einem Druckraum verbunden, der durch einen auf eine Reibungskupplung wirkenden Kolben begrenzt ist und wobei der auf den Kolben wirkende Druck mittels eines Kupplungsventiles steuerbar ist, das durch einen Abflusskanal die Verbindung zwischen der Druckseite der Pumpe und einem Raum niederen Druckes herstellt. In einer besonders vorteilhaften Ausbildung der Erfindung zweigt die Verbindungsleitung stromaufwärts des Kupplungsventiles ab (Anspruch 7). Dadurch wirkt die Steuerung der differenzdrehzahlabhängigen Kupplung auch im richtigen Sinn auf die Steuerung der Differentialsperre ein. Wenn erstere nur schwach anspricht, erfolgt auch die Sperrung der formschlüssigen Kupplung stärker verzögert beziehungsweise die Sperrung der kraftschlüssigen Kupplung auch nur teilweise.

In einer einfacheren Ausführungvariante mit einfacher aufgebauter differenzdrehzahlabhängiger Kupplung, bei der das Kupplungsventil in einem vom Druckkanal abzweigenden Abflusskanal angeordnet ist, zweigt die Verbindungsleitung stromaufwärts des Kupplungsventiles ab (Anspruch 8). Dabei genügt eine einzige Drehdurchführung für beide Ventile, ohne der Abstimmung der beiden Kupplungen Abbruch zu tun.

In einer weitergebildeten Ausführungsvariante, in der die Pumpe einen Druckraum und einen Saugraum und zwei Abflusskanäle besitzt, von denen einer je nach Richtung der Drehzahldifferenz mit dem Saugraum der Pumpe und einer mit dem Druckraum in Verbindung steht, wobei die Abflusskanäle über ein doppeltes Kupplungsventil mit dem Raum niederen Druckes in Verbindung stehen, bildet die Verbindungsleitung zwei Äste, von denen jeder mit einem der beiden Abflusskanäle stromaufwärts des Kupplungsventiles verbunden ist (Anspruch 9). Der jeweils andere Abflusskanal dient dann als Ansaugkanal für die Pumpe. Eine derartig ausgebildete differenzdrehzahlabhängige Kupplung ist ABS-kompatibel. Durch die zwei Äste ist die Betätigung der Differentialsperre unabhängig von der Richtung der Differenzdrehzahl und ebenfalls ABS-kompatibel.

Diese weitergebildete Ausführungvariante kann mit einer formschlüssigen oder mit einer kraftschlüssigen Differentialsperre ausgestattet sein. Im ersteren Fall ist in jedem der beiden Äste ein Rückschlagventil vorgesehen und das Steuerventil ist Dreistellungsventil (3/3-Wegeventil),
a) in dessen erster Stellung die Verbindung zwischen dem Druckraum der Pumpe offen ist,
b) in dessen zweiter Stellung das Betätigungsorgan mit dem Raum niederen Druckes verbunden ist, und
c) in dessen dritter Stellung das Betätigungsorgan weder mit dem Raum niederen Druckes noch mit dem Druckraum der Pumpe verbunden ist.
In der Stellung a) wird die Sperre geschlossen, in der Stellung b) geöffnet und in der Stellung c) geschlossen gehalten.

Im Falle einer kraftschlüssigen Sperrkupplung als Differentialsperre ist in jedem der beiden Äste ein Steuerventil vorgesehen und als pulsweitenmoduliertes Steuerventil ausgebildet (Anspruch 11). Die beiden Steuerventile sind der Richtung der Differenzdrehzahl zuordenbar und erlauben eine besonders feinfühlige Steuerung der Differentialsperre.

Im folgenden wird die Erfindung anhand von Abbildungen verschiedener Ausführungsformen beschrieben und erläutert. Es stellen dar:
- Fig. 1:: Schematisch das gesamte Antriebssystem,
- Fig. 2:: eine erste einfachere Variante mit formschlüssiger Sperre,
- Fig. 3:: eine zweite einfachere Variante mit kraftschlüssiger Sperre,
- Fig. 4:: eine dritte Variante mit steuerbarer Kupplung und formschlüssiger Sperre,
- Fig. 5:: eine vierte Variante mit steuerbarer Kupplung und kraftschlüssiger Sperre,
- Fig. 6:: eine andere Ausführungsform.

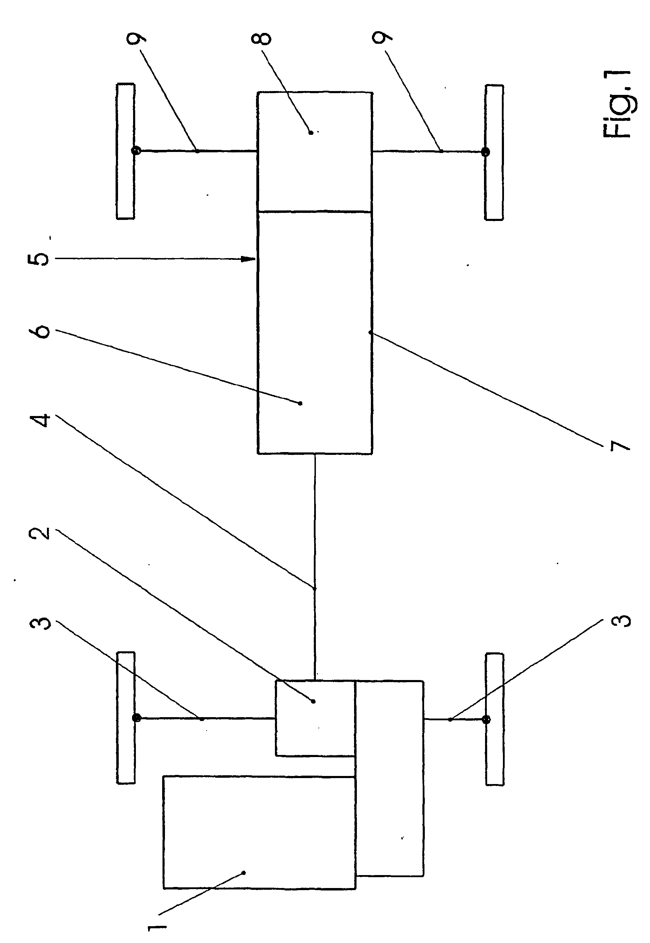

In Fig. 1 ist der Motorgetriebeblock mit 1 und der daran anschliessende Antriebsblock mit 2 bezeichnet. Von diesem aus werden die Halbachsen einer ersten angetriebenen Achse 3 und über einen nicht dargestellten Winkeltrieb eine zur zweiten angetriebenen Achse 9 führende Gelenkwelle 4 angetrieben. An die Gelenkwelle 4 schliesst das erfindungsgemäße Antriebssystem 5 an. Es besteht aus einer drehzahldifferenzabhängigen Kupplung 6, hier in einem stationären Gehäuse 7, und einem sperrbaren Differential 8 für die zweite angetriebene Achse 9, die in einem an das Gehäuse 7 angeflanschten oder mit diesem einstückigen Gehäuse untergebracht sein kann.

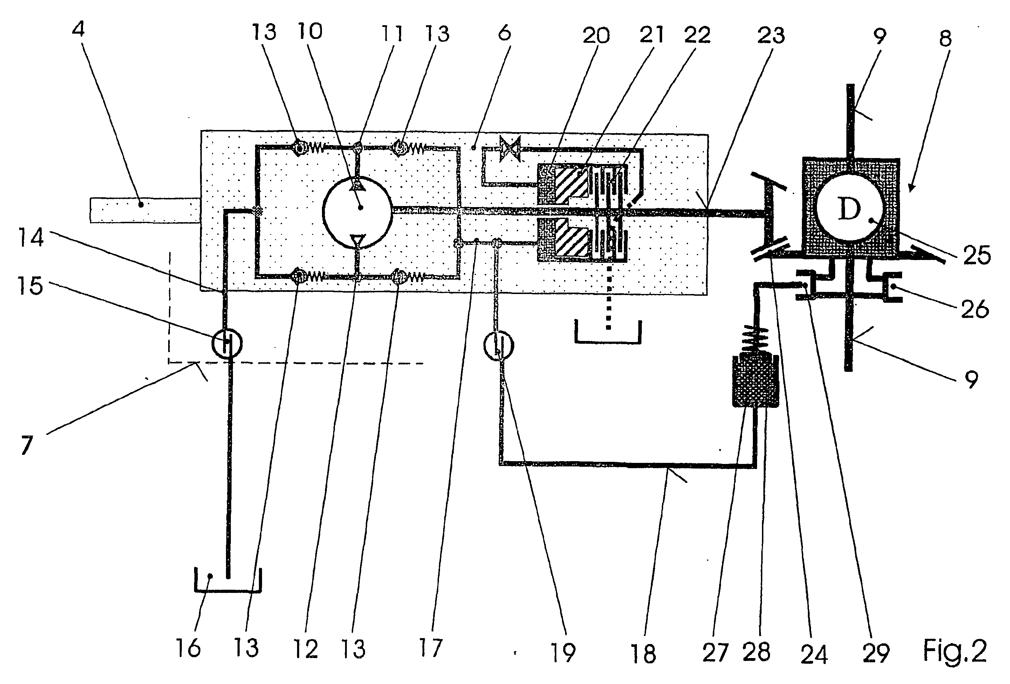

In Fig. 2 ist die von der Gelenkwelle 4 angetriebene, als ganzes rotierende drehzahldifferenzabhängige Kupplung 6 als Rechteck in dünner Linie angedeutet, deren Gehäuse 7 nur mit einer strichlierten Linie. Die den Druck für die Betätigung der drehzahldifferenzabhängigen Kupplung liefernde Pumpe ist mit 10 bezeichnet, deren Druckseite mit 11, deren Saugseite mit 12 und vier Stück sich auf beiden Seiten befindende Rückschlagventile mit 13. Bei der Pumpe handelt es sich beispiels- und vorzugsweise um eine volumetrische Pumpe von der in der EP629790B beschriebenen Bauart. Sie besitzt zwei Rotoren, von denen einer mit der Antriebsseite und der andere mit der Abtriebsseite verbunden ist. Bei Auftreten eine Differenzdrehzahl wird durch die Relativbewegung der beiden Rotoren Fluid gefördert und auf der Druckseite 11 ein Druck aufgebaut.

Da die Förderrichtung derartiger Pumpen von der Richtung der Drehzahldifferenz abhängt, wird die Druckseite 11 bei Umkehr Saugseite und vice versa. Die Rückschlagventile 13 sorgen jedoch dafür, dass die jeweilige Saugseite immer mit einem Saugkanal 14 und die jeweilige Druckseite immer mit einem Druckkanal 17 verbunden ist. Der Saugkanal 14 tritt über eine Drehdurchführung 15 in das nicht drehende Gehäuse 7 über und führt in einen Raum niederen Druckes 16, der hier ausserhalb des Gehäuses 7 eingezeichnet ist, sich in Wirklichkeit in diesem befindet.

Vom Druckkanal 17 zweigt eine Verbindungsleitung 18 ab, die auch wieder über eine Drehdurchführung 19 in das nicht rotierende Gehäuse übertritt. Vor allem aber führt der Druckkanal 17 in einen ebenfalls rotierenden Druckraum 20, in dem ein Kolben 21 unter der Wirkung dieses Druckes verschiebbar ist und so eine Reibungskupplung 22, hier eine Lamellenkupplung, beaufschlagt. Die Lamellenkupplung 22 stellt die Antriebsverbindung zwischen dem rotierenden Gehäuse 7 und einer Abtriebswelle 23 her, die über Kegelräder 24 ein Differential 25 der zweiten angetriebenen Achse 9 in gewohnter Weise antreibt. Dieses Differential ist ein Kegelraddifferential und besitzt eine Sperrkupplung 26, hier eine formschlüssige Kupplung, die von einem Betätigungsorgan 27 ein- bzw. ausgerückt wird. Dieses Betätigungsorgan 27 besteht aus einer Kolbenzylindereinheit 28 mit Rückhohlfeder und einer Schaltgabel 29.

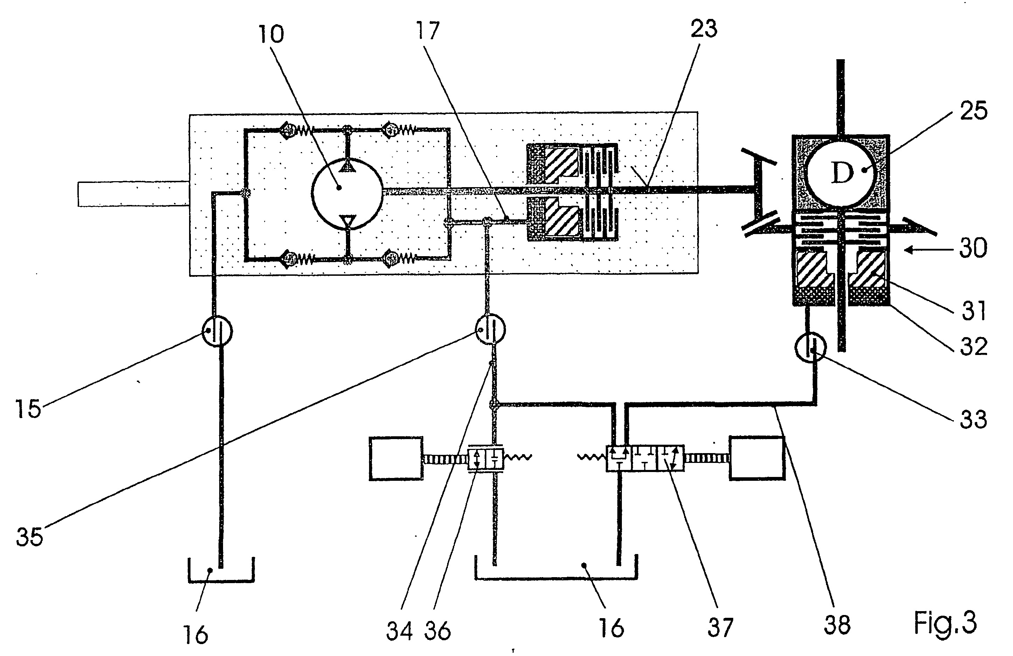

Die Variante der Fig. 3 unterscheidet sich von der der Fig. 2 dadurch, dass als Sperrkupplung für das Differential 25 eine kraftschlüssige Kupplung 30, somit eine Reibungs- und insbesondere eine Lamellenkupplung eingesetzt ist. Betätigt wird sie von einem abschließenden Kolben 31, der wie bei derartigen Differentialen üblich, gemeisam mit der Sperrkupplung 30 und mit dem Gehäuse des Differentiales 25 rotiert. Deshalb wird die Druckkammer 32 über eine Drehdurchführung 33 mit Druckfluid versorgt. Vom Druckkanal 17 zweigt ein Abflusskanal 34 ab, der über eine Drehdurchführung 35 zum Gehäuse geführt ist, in oder an dem ein Kupplungsventil 36 vorgesehen ist, das der Steuerung der Charakteristik der drehzahldifferenzabhängigen Kupplung 6 dient. Es ist beispielsweise ein elektronisch gesteuertes pulsweitenmoduliertes Ventil, mit dem der Druck in dem Druckkanal 17 verändert werden kann. Je mehr Fluid durch das Ventil 36 abfliesst, desto kleiner ist das von der drehzahldifferenzabhängigen Kupplung 6 übertragene Drehmoment.

Stromaufwärts des Kupplunsgventiles 36 zweigt eine Verbindungsleitung 38 zur Sperrkupplung 30 ab, in der sich ein Steuerventil 37 zur Beaufschlagung des Kolbens 31 der Sperrkupplung 30 befindet. Das Steuerventil 37 ist hier ein 3/3 Wegeventil. Dadurch, dass die Verbindungsleitung 38 stromaufwärts des Kupplungsventiles 36 abzweigt, wird der in ihr anstehende Druck auch von dem Kupplungsventil 36 gesteuert, wodurch bei abnehmendem zur zweiten Achse übertragenem Drehmoment auch das Sperrmoment in der Sperrkupplung 30 abnimmt und die Betätigung der Sperrkupplung 30 der der drehzahldifferenzabhängigen Kupplung immer zeitlich etwas nachlauft. Mittels des Steuerventiles 37 kann dieser Nachlauf vergrössert und der in der Verbindungsleitung 38 herrschende Druck gegenüber dem im Abflusskanal 34 abgesenkt werden. Damit wird ein zeitlich sauber abgestimmtes und den Fahrzustand berücksichtigendes Ansprechen der Differentialsperre gewährleistet.

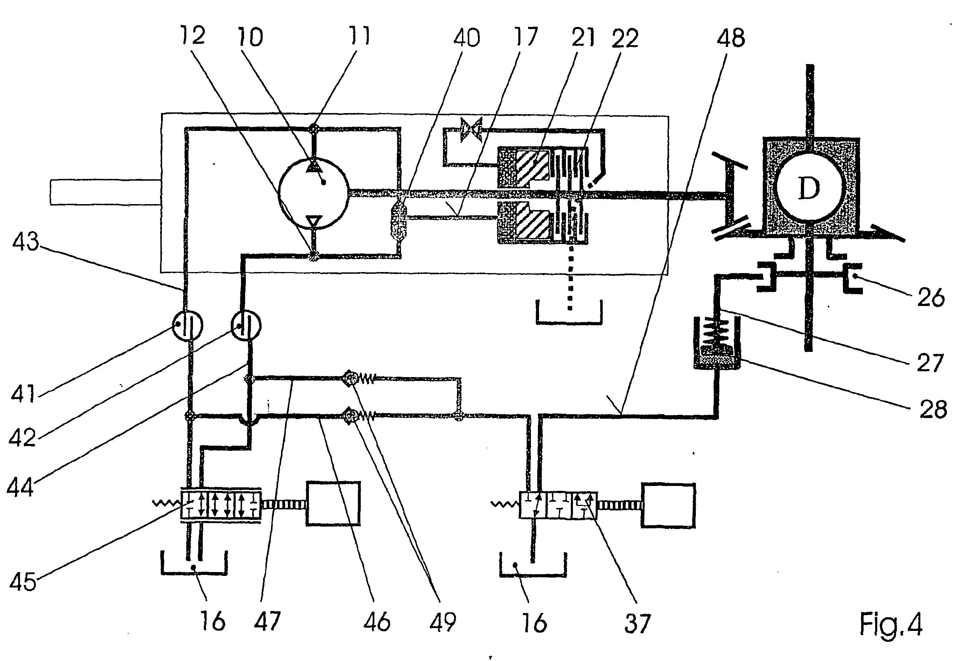

Die Variante der Fig. 4 unterscheidet sich von den Varianten der Fig. 2 und 3 dadurch, dass die drehzahldifferenzabhängige Kupplung 6 anders gesteuert ist. Die Druckseite 11 und die Saugseite 12 der Pumpe 10 sind hier über ein Wechselventil 40 mit dem Druckkanal 17 und über zwei Abflusskanäle 43,44 (von denen immer einer als Saugkanal dient, je nachdem ob 12 oder 11 die Saugseite ist) mit dem Raum niederen Druckes 16 verbunden. Die Abflusskanäle 43,44 sind wieder durch Drehdurchführungen 41,42 zum Gehäuse geführt, in oder an dem sich ein Kupplungsventil 45 befindet.

Mit diesem Kupplungsventil 45 wird der im Druckkanal 17 herrschende Druck und damit das von der drehzahldifferenzabhängigen Kupplung 6 übertragene Drehmoment gesteuert. Da hier beide Abflusskanäle 43,44 zum Kupplungsventil 45 führen, ist letzteres ein Doppelventil, das auch wieder als pulsweitenmoduliertes Ventil ausgeführt sein kann. Es gestattet eine genauere und schnellere Steuerung der drehzahldifferenzabhängigen Kupplung 6, die insbesondere für das Zusammenwirken mit einem ABS vorteilhaft ist.

Stromaufwärts des Kupplunsgventiles 45 zweigt wieder eine Verbindungsleitung 48 ab. Diese verzweigt sich hier jedoch in einen ersten Ast 46 und einem zweiten Ast 47, wovon einer am ersten Abflusskanal 43 und einer am zweiten Abflusskanal 44, wieder stromaufwärts des Kupplungsventiles 45, abzweigt. Damit je nach Richtung der an der Pumpe 10 herrschenden Dreh-zahldifferenz jeweils der als Abflussskanal dienende Kanal zur Verbindungsleitung 48 führt und der andere der beiden Äste gesperrt ist, sind zwei Rückschlagventile 49 vorgesehen.

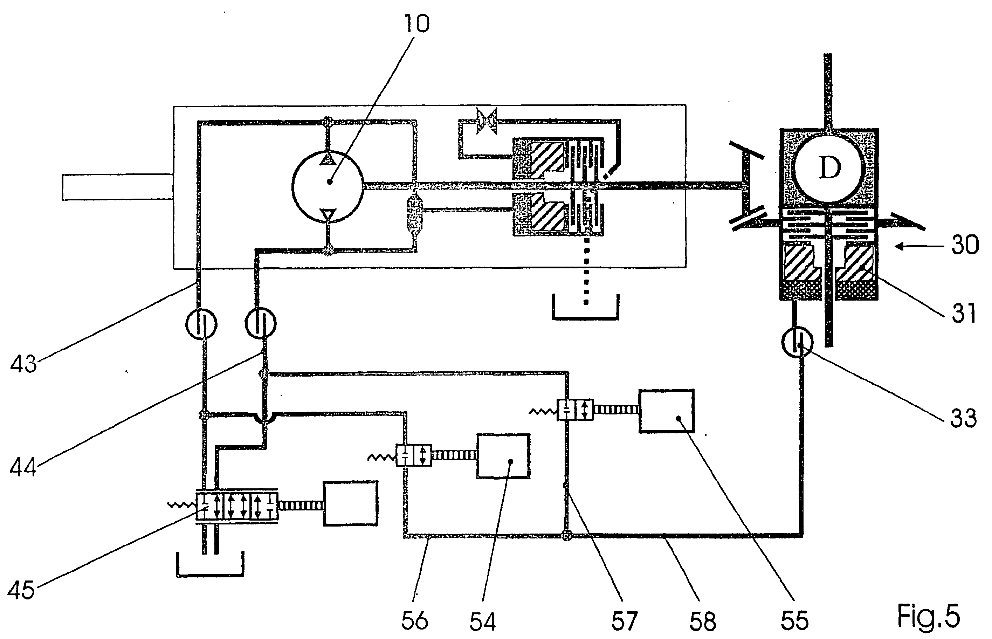

Die Variante der Fig. 5 unterscheidet sich von der der Fig. 4 dadurch, dass die Steuerung der Sperrkupplung 30 anders disponiert ist. An Stelle des Steuerventiles 37 sind hier zwei Steuerventile 54,55 vorgesehen und beispielsweise als pulsweitenmodulierte Sitzventile ausgeführt. Das erste Steuerventil 54 ist im ersten Ast 56 und das zweite Steuerventil 55 im zweiten Ast 57 der Verbindungsleitung 58 angeordnet. Die beiden Äste 56,57 zweigen wieder stromaufwärts des Kupplungsventiles 45 von den Abflusskanälen 43,44 ab.

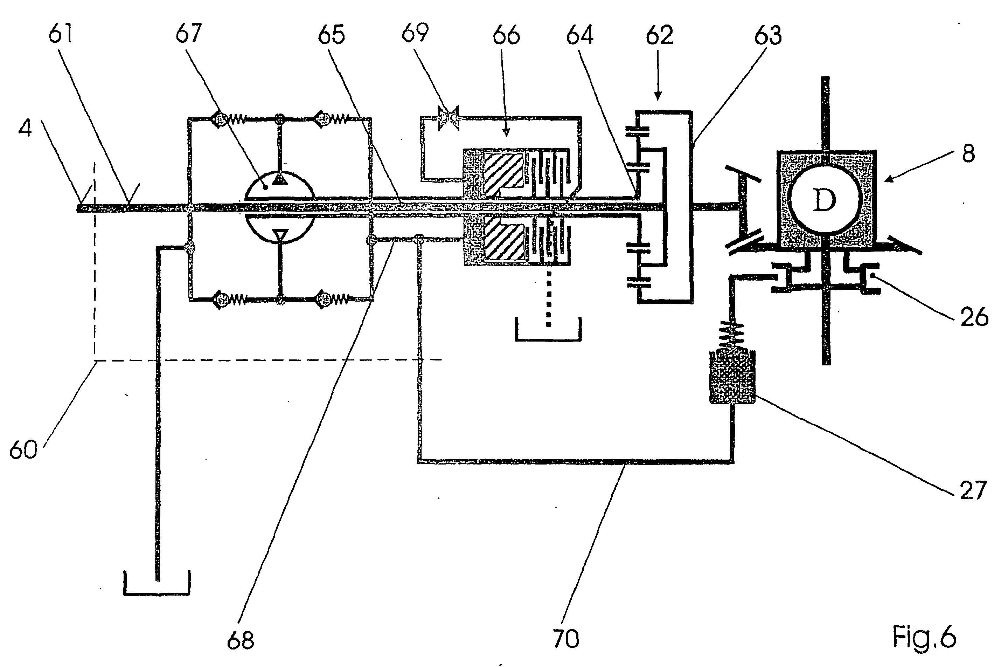

Fig. 6 zeigt ein Beispiel einer anderen Ausführungsform mit feststehender Pumpe. Für deren Anwendung sind somit keine Drehdurchführungen (wie zum Beispiel 15, 19 in Fig. 2) erforderlich. Das Gehäuse 60 ist mit einer strichlierten Linie angedeutet und dreht sich nicht. Die Gelenkwelle 4 findet ihre Fortsetzung in einer Eingangswelle 61, die andererseits in einem Planetengetriebe 62 endet. Sie treibt über Planetenräder einerseits über ein Hohlrad 63 das sperrbare Differential 8 und andererseits über ein Sonnenrad 64 eine Pumpenwelle 65, die durch die drehzahldifferenzabhängige Kupplung 66 hindurchgedurchgeführt ist und die Pumpe 67 (mit nicht im Einzelnen gezeigten feststehendem Gehäuse) antreibt. Die drehzahldifferenzabhängige Kupplung 66 ist stationär und wirkt als Bremse für die Pumpenwelle 65. Bei gleicher Drehzahl der beiden angetriebenen Achsen 3,9 läuft das Planetengetriebe 62 als Block um oder steht das Sonnenrad 64 bei entsprechender Wahl der Übersetzungen still. Bei Auftreten einer Drehzahldifferenz wird die Pumpe 67 vom Sonnenrad 64 angetrieben und liefert über einen Druckkanal 68 Druckfluid zur Kupplung 66, die die Sonneradwelle 65 abbremst und den Durchtrieb zum sperrbaren Differential 8 verstärkt. Von dem Druckkanal 68 zweigt wieder eine Verbindungsleitung 70 zum Betätigungsorgan 27 der Sperrkupplung 26.

Im Rahmen der Erfindung, definiert durch die Ansprüche, können die verschiedenen Elemente der beschriebenen Ausführungsbeispiele in verschiedener Weise kombiniert werden. In jedem Fall wird symmetrischer Antrieb der beiden Halbachsen der zweiten angetriebenen Achse und von selbst gute zeitliche und momentenmäßige Abstimmung der drehzahldifferenzabhängigen Kupplung und der Sperrkupplung aufeinander erreicht, die durch zusätzliche Steuereingriffe noch verfeinert werden kann.

## Patentansprüche

1. Antriebssystem für ein allradgetriebenes Kraftfahrzeug mit einer ersten und einer zweiten angetriebenen Achse (3,9), welches Antriebssystem eine Antriebsverbindung zu den Rädern der zweiten angetriebenen Achse (9) herstellt und eine differenzdrehzahlabhängige Kupplung (6) zum Antrieb der zweiten angetriebenen Achse und ein zumindest teilweise sperrbares Differential (8) zwischen den Rädern der zweiten angetriebenen Achse (9) aufweist, wobei die differenzdrehzahlabhängige Kupplung (6) eine Pumpe (10; 67) umfasst, die bei Auftreten einer Differenzdrehzahl zwischen erster und zweiter angetriebener Achse (3,9) einen Druck erzeugt, der zur Übertragung eines Drehmomentes zur zweiten angetriebenen Achse (9) führt, **dadurch gekennzeichnet, dass** von der Druckseite (11 oder 12) der Pumpe (10; 67) eine Verbindungsleitung (18; 38; 48; 58; 70) zu einem Betätigungsorgan (27; 31,32) des sperrbaren Differentiales (8) führt, sodass bei Auftreten einer Differenzdrehzahl der von der Pumpe (10; 67) erzeugte Druck ein zumindest teilweises Sperren des Differentiales (8) ermöglicht.

2. Antriebssystem nach Anspruch 1, wobei die gesamte differenzdrehzahlabhängige Kupplung (6) mit der Pumpe (10) selbst rotiert und in einem stationären Gehäuse (7) untergebracht ist, **dadurch gekennzeichnet, dass** die Wirkverbindung mit dem Betätigungsorgan (27; 31,32) des sperrbaren Differentiales (8) über eine Drehdurchführung (19; 35; 41,42) zwischen differenzdrehzahlabhängiger Kupplung (6) und stationärem Gehäuse (7) und über die Verbindungsleitung (18; 38; 48; 58) zum Betätigungsorgan (27; 31,32) hergestellt ist. (Fig. 2-5)

3. Antriebssystem nach Anspruch 1, wobei die gesamte differenzdrehzahlabhängige Kupplung (6) in einem stationären Gehäuse (60) untergebracht ist, **dadurch gekennzeichnet, dass** die Pumpe (67) im stationären Gehäuse (60) angordnet ist, von dem die Verbindungsleitung (70) zum Betätigungsorgan (27) führt. (Fig.6)

4. Antriebssystem nach Anspruch 1, **dadurch gekennzeichnet, dass** das sperrbare Differential (8) eine formschlüssige Sperrkupplung (26) besitzt, das Betätigungsorgan (27) gehäusefest ist und über eine mechanische Kraftübertragung (29) auf die Sperrkupplung (26) wirkt. (Fig. 2,4,6)

5. Antriebssystem nach Anspruch 1, **dadurch gekennzeichnet, dass** das sperrbare Differential (8) eine kraftschlüssige Sperrkupplung (30) aufweist, deren Betätigungsorgan ein mitdrehender Fluidkolben (31) ist, und die Wirkverbindung mit der Pumpe (10) über eine weitere Drehdurchführung (33) hergestellt ist. (Fig. 3,5)

6. Antriebssystem nach Anspruch 1, **dadurch gekennzeichnet, dass** in der Verbindungsleitung (38; 48; 58) ein Steuerventil (37; 54,55) für die Steuerung des sperrbaren Differentiales (8) vorgesehen ist. (Fig. 3,4,5)

7. Antriebssystem nach Anspruch 6, wobei die Druckseite (11 oder 12) der Pumpe (10) über einen Druckkanal (17) mit einem Druckraum verbunden ist, der durch einen auf eine Reibungskupplung (22) wirkenden Kolben (21) begrenzt ist, und wobei der auf den Kolben (21) wirkende Druck mittels eines Kupplungsventiles (36; 45) steuerbar ist, das durch einen Abflusskanal (34; 43 oder 44) die Verbindung zwischen der Druckseite der Pumpe (11 oder 12) und einem Raum niederen Druckes (16) herstellt, **dadurch gekennzeichnet, dass** die Verbindungsleitung (38; 48; 58) stromaufwärts des Kupplungsventiles (36; 45) abzweigt. (Fig. 3,4,5)

8. Antriebssystem nach Anspruch 7, **dadurch gekennzeichnet, dass** das Kupplungsventil (36) in einem Abflusskanal (34) angeordnet ist, der vom Druckkanal (17) abzweigt und von dem stromaufwärts des Kupplungsventiles (36) die Verbindungsleitung (38) abzweigt. (Fig. 3)

9. Antriebssystem nach Anspruch 7, wobei die Pumpe (10) die Druckseite (11,12) und eine Saugseite (12,11) und zwei Abflusskanäle (43,44) besitzt, von denen einer je nach Richtung der Drehzahldifferenz mit der Saugseite (12,11) der Pumpe (10) in Verbindung steht, welche Abflusskanäle (43,44) über das Kupplungsventil (45) mit dem Raum niederen Druckes (16) in Verbindung stehen, **dadurch gekennzeichnet, dass** die Verbindungsleitung (48; 58) zwei Äste (46,47; 56,57) bildet, von denen jeder mit einem der beiden Abflusskanäle (43,44) stromaufwärts des Kupplungsventiles (45) verbunden ist. (Fig. 4,5)

10. Antriebssystem nach Anspruch 9 mit einer formschlüssigen Sperrkupplung (26), **dadurch gekennzeichnet, dass** in jedem der beiden Äste (46,47) ein Rückschlagventil (49) vorgesehen ist und dass als Steuerventil (37) ein Dreistellungsventil vorgesehen ist,
a) in dessen erster Stellung die Verbindung zwischen der Druckseite (11 oder 12) der Pumpe (10) und dem Betätigungsorgan (27) offen ist,
b) in dessen zweiter Stellung das Betätigungsorgan (27) mit dem Raum niederen Druckes (16) verbunden ist, und
c) in dessen dritter Stellung das Betätigungsorgan (27) weder mit dem Raum niederen Druckes (16) noch mit der Druckseite (11 oder 12) der Pumpe (10) verbunden ist. (Fig. 4)

11. Antriebssystem nach Anspruch 9 mit einer kraftschlüssigen Sperrkupplung (30), **dadurch gekennzeichnet, dass** in jedem der beiden Äste (56,57) ein Steuerventil (54,55) vorgesehen und als pulsweitenmoduliertes Steuerventil ausgebildet ist. (Fig .5)

## Claims

1. A drive system for an all-wheel driven motor vehicle having a first and a second driven axle (3, 9), which drive system produces a driving connection to the wheels of the second driven axle (9) and has a differential-speed-dependent clutch (6) for driving the second driven axle, and an at least partially lockable differential (8) between the wheels of the second driven axle (9), the differential-speed-dependent clutch (6) comprising a pump (10;67) which, when a differential speed between the first and second driven axles (3, 9) occurs, produces a pressure which leads to the transmission of a torque to the second driven axle (9), **characterized in that** a connecting line (18; 38; 48; 58; 70) leads from the delivery side (11 or 12) of the pump (10; 67) to an actuating member (27; 31, 32) of the lockable differential (8), with the result that, when a differential speed occurs, the pressure produced by the pump (10; 67) makes it possible to at least partially lock the differential (8).

2. The drive system as claimed in claim 1, the entire differential-speed-dependent clutch (6) automatically rotating together with the pump (10) and being accommodated in a stationary housing (7), **characterized in that** the operative connection to the actuating member (27; 31, 32) of the lockable differential (8) is produced via a rotary connection (19; 35; 41, 42) between the differential-speed-dependent clutch (6) and stationary housing (7) and via the connecting line (18; 38; 48; 58) to the actuating member (27; 31, 32). (Figs 2-5)

3. The drive system as claimed in claim 1, with the entire differential-speed-dependent clutch (6) being accommodated in a stationary housing (60), **characterized in that** the pump (67) is arranged in the stationary housing (60) from which the connecting channel (70) leads to the actuating member (27). (Fig. 6)

4. The drive system as claimed in claim 1, **characterized in that** the lockable differential (8) has a positive locking clutch (26), the actuating member (27) is fixed on the housing and acts on the locking clutch (26) via a mechanical power train (29). (Figs 2, 4, 6)

5. The drive system as claimed in claim 1, **characterized in that** the lockable differential (8) has a non-positive locking clutch (30), the actuating member of which is a concomitantly rotating fluid piston (31), and the operative connection to the pump (10) is produced via a further rotary leadthrough (33). (Figs 3, 5)

6. The drive system as claimed in claim 1, **characterized in that** a control valve (37; 54, 55) for controlling the lockable differential (8) is provided in the connecting line (38; 48; 58). (Figs 3, 4, 5)

7. The drive system as claimed in claim 6, the delivery side (11 or 12) of the pump (10) being connected via a pressure channel (17) to a pressure space which is bounded by a piston (21) acting on a friction clutch (22), and it being possible for the pressure acting on the piston (21) to be controlled by means of a clutch valve (36; 45) which produces the connection between the delivery side of the pump (10) and a low-pressure space (16) by a discharge channel (34; 43 or 44), **characterized in that** the connecting line (38; 48; 58) branches off upstream of the clutch valve (36; 45). (Figs 3, 4, 5)

8. The drive system as claimed in claim 7, **characterized in that** the clutch valve (36) is arranged in a discharge channel (34) which branches off from the pressure channel (17) and from which the connecting line (38) branches off upstream of the clutch valve (36). (Fig. 3)

9. The drive system as claimed in claim 7, the pump (10) having a pressure side (11, 12) and an intake side (12, 11) and two discharge channels (43, 44), one of which is connected, depending in each case on the direction of the difference in speed, to the intake side (12, 11) of the pump (10), which discharge channel (43, 44) are connected via the clutch valve (45) to the low-pressure space (16), **characterized in that** the connecting line (48; 58) forms two branches (46, 47; 56, 57), each of which is connected to one of the two discharge channels (43, 44) upstream of the clutch valve (45). (Figs 4, 5)

10. The drive system as claimed in claim 9 having a positive locking clutch (26), **characterized in that** a nonreturn valve (49) is provided in each of the two branches (46, 47), and **in that** the control valve (37) is a three-position valve,
a) in the first position of which the connection between the pressure space (11 or 12) of the pump (10) and the actuating member (27) is open,
b) in the second position of which the actuating member (27) is connected to the low-pressure space (16), and
c) in the third position of which the actuating member (27) is connected neither to the low-pressure space (16) nor to the pressure space (11 or 12) of the pump (10). (Fig. 4)

11. The drive system as claimed in claim 9 having a non-positive locking clutch (30), **characterized in that** a control valve (54, 55) is provided in each of the branches (56, 57) and is designed as a pulse-width-modulated valve. (Fig. 5)

## Revendications

1. Système d'entraînement pour véhicule automobile à quatre roues motrices comportant des premier et deuxième essieux entraînés (3, 9), lequel système d'entraînement réalise une liaison motrice avec les roues du deuxième essieu entraîné (9) et comporte un embrayage (6), fonction de la différence de nombres de tours et destiné à entraîner le deuxième essieu entraîné, et un différentiel (8), au moins partiellement blocable, situé entre les roues du deuxième essieu entraîné (9), l'embrayage (6) fonction de la différence de nombres de tours comportant une pompe (10 ; 67) qui génère, lorsqu'une différence de nombres de tours apparaît entre les premier et deuxième essieux entraînés (3, 9), une pression qui provoque la transmission d'un couple de rotation au deuxième essieu entraîné (9), **caractérisé en ce qu'**une ligne de liaison (18 ; 38 ; 48 ; 58 ; 70) mène, du côté sous pression de la pompe (10 ; 67), à un organe de commande (27 ; 31, 32) du différentiel blocable (8) de sorte que, lorsqu'une différence de nombres de tours apparaît, la pression générée par la pompe (10, 67) permet un blocage au moins partiel du différentiel (8).

2. Système d'entraînement selon la revendication 1, dans lequel tout l'embrayage (6), fonction de la différence de nombres de tours, tourne conjointement avec la pompe elle-même (10) et est monté dans un boîtier fixe (7), **caractérisé en ce que** la liaison active avec l'organe de commande (27 ; 31, 32) du différentiel blocable (8) est réalisée par un passage tournant (19 ; 35 ; 41, 42) entre l'embrayage (6), fonction de la différence de nombres de tours, et le boîtier fixe (7) et par la ligne de liaison (18 ; 38 ; 48 ; 58) menant à l'organe de commande (27 ; 31, 32) (figures 2 à 5).

3. Système d'entraînement selon la revendication 1, dans lequel tout l'embrayage (6), fonction de la différence de nombres de tours, est monté dans un boîtier fixe (7), **caractérisé en ce que** la pompe (67) est agencée dans le boîtier fixe (60) d'où part la ligne de liaison (70) en direction de l'organe de commande (27).

4. Système d'entraînement selon la revendication 1, **caractérisé en ce que** le différentiel blocable (8) possède un embrayage à blocage par verrouillage de forme (26), et **en ce que** l'organe de commande (27) est fixe par rapport au boîtier et agit sur l'embrayage à blocage (26) via une transmission mécanique (29).

5. Système d'entraînement selon la revendication 1, **caractérisé en ce que** le différentiel blocable (8) comporte un embrayage à blocage par adhérence (30) dont l'organe de commande est un piston hydraulique (31) tournant de conserve, et la liaison active avec la pompe (10) est réalisée par un autre passage tournant (33) (figures 3, 5).

6. Système d'entraînement selon la revendication 1, **caractérisé en ce qu'**il est prévu dans la ligne de liaison (38 ; 48 ; 58) un clapet de commande (37 ; 54, 55) destiné à commander le différentiel blocable (8) (figures 3, 4, 5).

7. Système d'entraînement selon la revendication 6, dans lequel le côté sous pression (11 ou 12) de la pompe est relié via un canal de pression (17) à une chambre sous pression qui est limitée par un piston (21) agissant sur un embrayage à friction (22), et dans lequel la pression agissant sur le piston (21) peut être commandée au moyen d'un clapet d'embrayage (36 ; 45) qui réalise via un canal d'écoulement (34 ; 43 ou 44) la liaison entre le côté sous pression de la pompe (11 ou 12) et un espace de faible pression (16), **caractérisé en ce que** la ligne de liaison (38 ; 48, 58) bifurque en amont du clapet d'embrayage (36 ; 45) (Figure 3, 4, 5).

8. Système d'entraînement selon la revendication 7, **caractérisé en ce que** le clapet d'embrayage (36) est agencé dans un canal d'écoulement (34) qui bifurque du canal sous pression (17) et la ligne de liaison (38) bifurque en amont du clapet d'embrayage (36) (figure 3).

9. Système d'entraînement selon la revendication 7, dans lequel la pompe (10) possède le côté sous pression (11, 12) et un côté sous dépression (12, 11) et deux canaux d'écoulement (43, 44) dont l'un est en liaison avec le côté sous dépression (12, 11) de la pompe (10) en direction de la différence de nombres de tours, lesquels canaux d'écoulement (43, 44) sont en liaison avec l'espace de faible pression (16) via le clapet d'embrayage (45), **caractérisé en ce que** la ligne de liaison (48 ; 58) forme deux branches (46, 47 ; 56, 57) qui sont chacune reliées à l'un des deux canaux d'écoulement (43, 44) en amont du clapet d'embrayage (45).

10. Système d'entraînement selon la revendication 9 comportant un embrayage à blocage par verrouillage de forme (26), **caractérisé en ce qu'**il est prévu dans chacune des deux branches (46, 47) un clapet anti-retour (49) et **en ce qu'**il est prévu comme clapet de commande (37) un clapet à trois positions :
a) dans la première position, la liaison entre le côté sous pression (11 ou 12) de la pompe (10) et l'organe de commande (27) étant ouverte,
b) dans la deuxième position, l'organe de commande (27) étant relié à l'espace de faible pression (16), et
c) dans la troisième position, l'organe de commande (27) n'étant relié ni à l'espace de faible pression (16) ni au côté sous pression (11 ou 12) de la pompe (figure 4).

11. Système d'entraînement selon la revendication 9 comportant un embrayage à blocage par adhérence (26), **caractérisé en ce qu'**il est prévu dans chacune des deux branches (56, 57) un clapet de commande (49) conformé en clapet de commande modulé en largeur d'impulsion (figure 5).
